# EUROPEAN PATENT APPLICATION

(11) **EP 4 234 268 A1**
(43) Date of publication of application: **30.08.2023**
(21) Application number: 22194773.2
(22) Date of filing: 09.09.2022
(51) Int. Cl.: B60B 3/00, B60B 19/12, B60B 21/02, B60B 23/00, A61H 3/04

(54) **ANTI-ROLLING WHEEL**

(30) Priority: 25.02.2022 KR 20220024783
(71) Applicant: Auto&Robot Inc., Republica of Korea 31416 (KR)
(72) Inventor: HAM, Hun Ju, 31537 Chungcheongnam-do (KR); KIM, Jong Sung, 26454 Gangwon-do (KR)
(74) Representative: Urizar Anasagasti, Jesus Maria

(57) **Abstract**

Proposed is an anti-rolling wheel mounted on a walking aid used when a patient or an elderly with impaired mobility walks. More particularly, the anti-rolling wheel is configured to control rolling thereof on a slope and thus to prevent arbitrary movement of the walking aid on the slope, thereby preventing safety accident caused by the arbitrary movement of the walking aid on a slope and preventing a secondary accident.

## Description

### BACKGROUND OF THE INVENTION

### Field of the Invention

The present disclosure relates to an anti-rolling wheel mounted on a walking aid used when a patient or an elderly person with impaired mobility walks and, more particularly, to the anti-rolling wheel mounted on the walking aid to prevent arbitrary movement of the rolling on a slope and a secondary accident.

### Description of the Related Art

With the rapid aging of the world, walking aids that can help an elderly person with mobility difficulties or patients with reduced mobility due to acquired factors are widely distributed.

In other words, as is well known, walking aids are used for assistance when patients, the elderly, and a person with impaired legs or body walk, and these walking aids support the body when such persons deambulate or move to other places.

Conventional walking aids have various forms, but generally include a manipulation handle part that can be operated while pushing or pulling by gripping by hand, a body connected to the lower side of the manipulation handle part and usually formed by bending a steel pipe to form a frame, and a front wheel and a rear wheel provided at a lower end of the body.

In addition, the conventional walking aids are provided with a lever on the manipulation handle part and are connected a brake device capable of stopping the rear wheel with the lever, so that a user could stop the walking aid by operating the lever installed on the manipulation handle part.

However, in the conventional walking aids, when the user loses a handle of the walking aid from their hand on a slope, the walking aid moves arbitrarily. Furthermore, there was a problem in that large and small accidents such as fall accidents and safety accidents caused by collisions with the walking aid while the user attempt to prevent the arbitrary movement of the walking aid.

Therefore, there is a need to develop a walking aid designed to prevent the occurrence of a safety accident in which the walking aid is overturned due to the sudden weight shift of the user.

### Documents of Related Art

Korean Patent No. 10-0768645, "Parking Brake Device for Walking Aids" (Registration date: October 12, 2007)
Korean Patent No. 10-0902252, "Braking Device for Walking Aids" (Registration date: June 3, 2009)

### SUMMARY OF THE INVENTION

The present disclosure has been made in an effort to solve the above problems, and an objective of the present disclosure is to provide an anti-rolling wheel capable of preventing an arbitrary movement of a walking aid on a slope or a flat surface and preventing safety accidents that may occur when a user walks, and a walking aid including the same.

The anti-rolling wheel of the present disclosure includes a ring-shaped main wheel 100, an inner frame 200 positioned inside the main wheel 100, wherein the inner frame including at least two auxiliary wheels 210 that come into contact with an inner surface of the main wheel 100 and rotate when the main wheel 100 is driven, and a sliding block 300 installed to be movable under the guide of the inner frame 200.

The anti-rolling wheel of the present disclosure includes an upper braking unit 400 installed at an upper side of the inner frame 200 and configured such that a first end thereof comes into contact with and is separated from the inner surface of the main wheel 100 according to a movement of the sliding block 300, and a first elastic member 500 configured to elastically support the sliding block 300 so that the upper braking unit 400 selectively provides a braking force to the main wheel 100.

According to the present disclosure, the auxiliary wheels 210 are configured as a pair, wherein the anti-rolling wheel further includes a guide part 120 provided on the inner surface of the main wheel 100, wherein the guide part 120 is provided with a wheel guide groove 121 recessed from a surface at each of opposite edges, wherein the auxiliary wheels 210 are configured respectively to come into contact with the wheel guide grooves 121 provided on the opposite edges of the guide part.

In addition, the guide portion 120 of the present invention further includes a braking friction part (122) configured to contact with or to be separated from the upper braking unit (400).

According to the present disclosure, the anti-rolling wheel is driven only when a predetermined load is transmitted to the walking aid and may prevent the walking aid from arbitrarily moving.

Moreover, the present disclosure has an advantage of preventing a safety accident caused by a walking aid rolling along a slope when a user loses a handle the walking aid.

### BRIEF DESCRIPTION OF THE DRAWINGS

FIG. 1 is a perspective view illustrating an embodiment in which an anti-rolling wheel is mounted in a walking aid of the present disclosure;
FIG. 2 is a side view illustrating an upper braking unit and a first elastic member of the present disclosure;
FIG. 3 is a partial perspective view illustrating a configuration of a guide part and an auxiliary wheel of the present disclosure;
FIG. 4 is a side view illustrating an embodiment of operation of an upper braking unit and a first elastic member of the present disclosure.

### DETAILED DESCRIPTION OF THE INVENTION

Hereinafter, an embodiment of an anti-rolling wheel of the present disclosure will be described in detail with reference to the drawings.

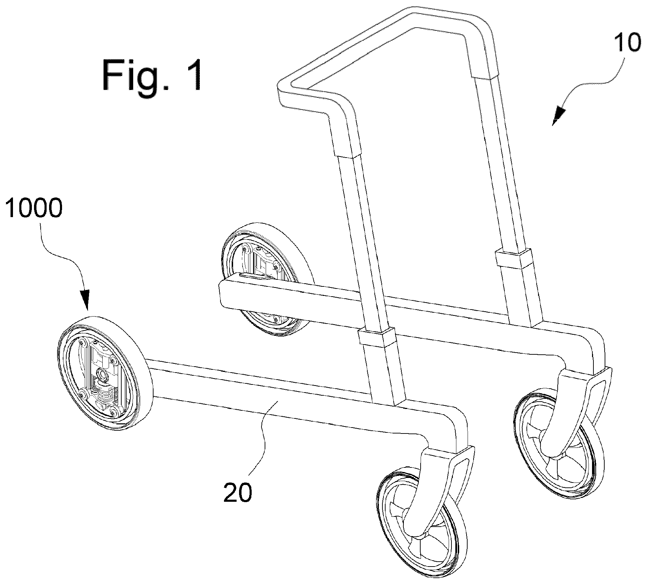

Referring to Fig. 1, the anti-rolling wheel 1000 of the present disclosure may be mounted on a front or a rear part of a walking aid 10 in order to provide a braking force to the walking aid 10.

In more detail, the anti-rolling wheel 1000 is connected to the body frame 20 of the walking aid 10, and a user walk while gripping the walking aid 10 and transmitting a predetermined amount of weight to the walking aid 10.

On the other hand, when the user does not grip the walking aid 10, a braking force is applied to the anti-rolling wheel 1000 to limit the movement of the walking aid 10, which provides an effect of preventing the walking aid 10 from arbitrarily moving.

An operation and an embodiment of the anti-rolling wheel 1000 will be described in detail.

### Embodiment 1

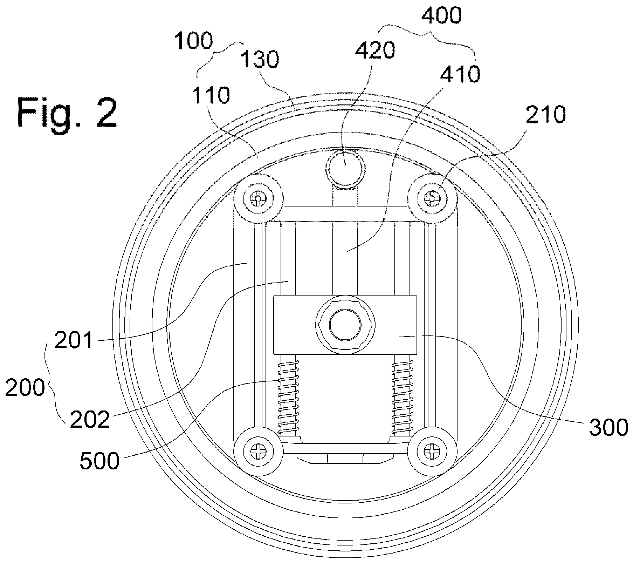

Referring to Fig. 2, an anti-rolling wheel 1000 includes a main wheel 100, an inner frame 200, and a sliding block 300.

The main wheel 100 has a ring shape and includes a rim 110 and a tire 130. The rim 110 has a ring or cyclic shape connected along a circular path and has a hollow central part. The tire 130 may be further formed on the outer surface of the rim 110 to provide a friction force between the ground and the rim 110 so that the rim 110 may be smoothly driven.

The inner frame 200 includes the main wheel 100, that is, the inner frame 200 includes an auxiliary wheel 210 rotating in contact with an inner surface of the hollow central part of the rim 110. The inner frame 200 is disposed on the inner surface of the hollow central part of the rim 110, and the auxiliary wheel 210 is rotatably installed at a corner part of the inner frame 200. That is, the auxiliary wheel 210 is rotatably installed on the inner frame 200 so as to be in contact with the inner surface of the rim 110.

At least two auxiliary wheels 210 may be installed on the inner frame 200 and may be configured to connect the inner frame 200 to the main wheel 100, and preferably, four auxiliary wheels may be provided to stably connect the inner frame 200 to the main wheel 100. Due to this configuration, when the main wheel 100 rotates, the auxiliary wheel 210 rotates while the inner frame 200 is fixed, so that the walking aid 10 can move.

Meanwhile, the auxiliary wheel 210 may be rotatably installed on a wheel bracket 203 formed at the corner part of the inner frame 200. Any one of the auxiliary wheels 210 of the two or more auxiliary wheels 210 may be configured as a pair, symmetrical with respect to the wheel bracket 203.

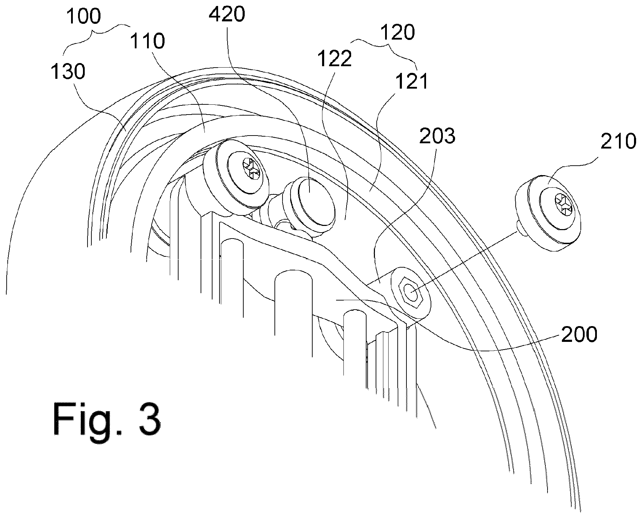

Referring to Fig. 3, on an inner surface of the main wheel 100, a guide part 120 to which the auxiliary wheel 210 is in contact is formed while forming a ring shape along the inner surface of the main wheel 100. A pair of wheel guide grooves 121 are set with the auxiliary wheel 210 and may be formed to be slightly recessed in opposite edges of the guide part 120, respectively.

That is, while the auxiliary wheel 210 is set with the wheel guide groove 121, the guide part 120 is disposed between the auxiliary wheels 210, thereby minimizing a gap between the auxiliary wheel 210 and the guide part 120. Thereby, there is an advantage that can improve durability by preventing the occurrence of a gap between the main wheel 100 and the auxiliary wheel 210 when the main wheel 100 is driven.

The sliding block 300 is guided by the inner frame 200 and is installed to be movable up and down. That is, the inner frame 200 is further provided with an outer frame 201 and a pair of rail frames 202 extending up and down while being spaced apart from each other by a predetermined distance inside the outer frame 201. In this case, the sliding block 300 is coupled to the rail frame 202 and may move vertically along the extending longitudinal direction of the rail frame 202.

### Embodiment 2

Referring to FIGS. 2 and 3, an anti-rolling wheel of the present disclosure may include a main wheel 100, an inner frame 200, and the sliding block 300, and may further include an upper braking unit 400 and a first elastic member 500.

The upper braking unit 400 is installed to be vertically movable on an upper side of the inner frame 200. The upper braking unit 400 includes an upper rod 410 extending through an upper side of an outer frame 201 of the inner frame 200 and an upper friction part 420 installed at an upper end of the upper rod 410 to contact the inner surface of the main wheel 100. The upper friction part 420 is preferably made of a material having a high friction coefficient.

Meanwhile, a lower end of the upper rod 410 is set on the upper surface of the sliding block 300, and the upper rod 410 may move vertically together with the sliding block 300 according to the movement of the sliding block 300. When the sliding block 300 moves upward, the upper friction part 420 contacts the inner surface of the main wheel 100 to provide a braking force so that driving of the main wheel 100 is limited. Conversely, when the sliding block 300 moves downward, the upper rod 410 moves downward together with the sliding block 300 by gravity, and the upper friction part 420 is spaced apart from the inner surface of the main wheel 100, thereby releasing the braking force applied on the upper friction part 420.

The first elastic member 500 is in contact with a lower surface of the sliding block 300 with a coil spring and is configured to elastically support the sliding block 300. That is, when the first elastic member 500 elastically supports the sliding block 300 to be pulled upward, the upper friction part 420 of the upper rod 410 set on the upper surface of the sliding block 300 may be in contact with the inner surface of the main wheel 100, thereby providing continuous braking force to the main wheel 100.

Conversely, when a load equal to or higher than a modulus of elasticity of the first elastic member 500 is transmitted to the sliding block 300 and the first elastic member 500 is compressed, the sliding block 300 descends and the upper friction part 420 is separated from the inner surface of the main wheel 100. Therefore, the upper braking unit 400 may selectively provide the braking force to the main wheel 100 according to a user gripping a walking aid 10.

Meanwhile, the upper friction part 420 provides a braking force to the main wheel 100 while in contact with a braking friction part 122 formed in the center of the guide part 120 of Embodiment 1, and the braking friction part 122 is preferably made of the material having a high friction coefficient. Thereby, the braking force provided to the main wheel 100 may be further improved.

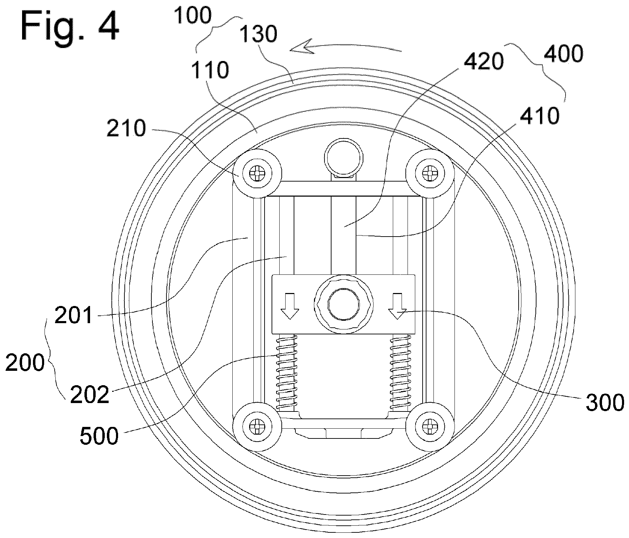

Referring to Fig. 1 to 4, the anti-rolling wheel 1000 to which all of Embodiments 1 to 2 are applied may be configured and may be installed in the walking aid 10.

The present disclosure by such a configuration has an advantage of solving the problems of the conventional art in which the walking aid 10 moves arbitrarily and preventing the risk of a secondary accident.

While the embodiments of the present disclosure have been described, it will be apparent to those skilled in the art that various modifications and variations can be made in the present disclosure through addition, change, omission, or substitution of components without departing from the spirit of the invention as set forth in the appended claims, and such modifications and changes may also be included within the scope of the present disclosure.

## Claims

1. An anti-rolling wheel comprising:
a ring-shaped main wheel (100);
an inner frame (200) positioned inside the main wheel (100), wherein the inner frame comprising at least two auxiliary wheels (210) that come into contact with an inner surface of the main wheel (100) and rotate when the main wheel (100) is driven; and
a sliding block (300) provided to be movable under the guide of the inner frame (200).

2. The anti-rolling wheel of claim 1, further comprising:
an upper braking unit (400) provided at an upper side of the inner frame (200) and configured such that a first end comes into contact with or is separated from the inner surface of the main wheel (100) according to a movement of the sliding block (300); and
a first elastic member (500) configured to elastically support the sliding block (300) so that the upper braking unit (400) selectively provides a braking force to the main wheel (100).

3. The anti-rolling wheel of claim 2, further wherein the auxiliary wheels (210) are configured as a pair, wherein the anti-rolling wheel further comprises a guide part (120) provided on the inner surface of the main wheel (100), the guide part (120) being provided with a wheel guide groove (121) recessed from a surface at each of opposite edges of the guide part, wherein the auxiliary wheels (210) are configured respectively to come into contact with the wheel guide grooves (121) provided on the opposite edges of the guide part.

4. The anti-rolling wheel of claim 3, wherein the guide part (120) further comprises a braking friction part (122) configured to contact with or to be separated from the upper braking unit (400).
